# EUROPEAN PATENT SPECIFICATION

(11) **EP 3 026 689 B1**
(45) Date of publication and mention of the grant of the patent: **27.06.2018**
(21) Application number: 14195293.7
(22) Date of filing: 27.11.2014
(51) Int. Cl.: H01H 33/662, H01H 33/666

(54) **High voltage circuit breaker, system, vacuum interrupter module, and associated drive module**
Hochspannungsstromunterbrecher, System, Vakuumunterbrechermodul und zugehöriges Antriebsmodul
Disjoncteur haute tension, système, module interrupteur à vide et module d'entraînement associé

(43) Date of publication of application: 01.06.2016
(73) Proprietor: Tyco Electronics UK Limited, Swindon, Wiltshire SN3 5HH (GB)
(72) Inventor: Phillpotts, Robert, Swindon, Wiltshire SN3 4QB (GB); Da Silva Domingues, Elizabeth, Chippenham, Wiltshire SN14 0YA (GB); Moore, Thomas, Marlborough, Wiltshire SN8 2FE (GB)
(74) Representative: Grünecker Patent- und Rechtsanwälte PartG mbB

(56) References cited:
- EP-A2- 0 782 160
- DE-A1-102011 089 812
- US-A1- 2013 092 658
- US-B1- 8 497 446

## Description

### FIELD OF THE INVENTION

The invention relates to circuit breakers and electric equipment for railways, in particular, trains using a high voltage alternating current electrification system, such as standard 15 kV and 25 kV AC systems.

### BACKGROUND OF THE INVENTION

There are many voltage systems used for railway electrification around the world. Most frequently voltages specified in the relevant standards are used. For the alternating current, nowadays 15 kV and 25 kV systems are widely distributed. Also, there are several railways in the world with an AC voltage higher than 10 kV and several lines with a voltage higher than 25 kV. In the present document, these voltages, or other voltages higher than 10 kV, are called "high". Also, in this document the term "circuit breaker" shall mean "high voltage circuit breaker".

Typically, a railway car connects to a power line via a pantograph, with the connection switchable by a circuit breaker. In such field as electrical power distribution, the circuit breaker is often understood as a device which switches off the current in case of maintenance, short circuit tripping, or another abnormality. However, in the field of train electrification, the circuit breaker rather means a regularly operated controllable switch.

The railway train circuit breaker must have a high durability, since such a device is to be operated routinely on a daily basis, rather than only occasionally in abnormal situations. A train circuit breaker may be required to perform several hundred-thousand switching cycles over its working life, a factor of more than thousand times that required of circuit breakers in some other fields.

A conventional high AC voltage railway circuit breaker includes a pair of contacts in vacuum. When the circuit is to be switched on, the contacts engage in mechanical connection. The vacuum enables switching of high voltages within a small and durable device that confines and minimises high voltage arcing.

Typically, the circuit breaker is placed on the roof of a train car and negatively affects train aerodynamics.

US 8,497,446 discloses an encapsulated vacuum interrupter with grounded end cup and drive rod. The double break vacuum interrupter includes a first contact system including an annular stationary contact which is engaged by a primary moving contact with the moving contact drive rod extending through the primary moving contact and through the opening of the annular stationary contact. A second contact system includes a secondary moving contact placed on the end of the moving contact rod, which engages and operates a floating contact, which moves along the same axis. A mechanical adjustment system is provided for the floating contact. A coaxial moving contact drive rod system is provided. With the encapsulated vacuum interrupter, the lower portion of the vacuum envelope is insulated from the current path, which allows for the elimination of the long internal cavity in the encapsulation as the lower end cup of the vacuum envelope may be grounded.

US 2013/092658 discloses modular switchgear and methods for manufacturing the same. The modular switchgear includes a vacuum interrupter assembly, a source conductor assembly, and a housing assembly. The vacuum interrupter assembly includes a bushing, a fitting, and a vacuum interrupter at least partially molded within the bushing and including a movable contact and a stationary contact. The source conductor assembly includes a bushing, a fitting, and a source conductor molded within the bushing. The housing assembly includes a housing defining a chamber and a drive shaft and conductor positioned within the chamber. The housing assembly also includes a first receptacle for receiving the fitting of the vacuum interrupter assembly and a second receptacle for receiving the fitting of the source conductor assembly. The vacuum interrupter assembly, the source conductor assembly, and the housing assembly are coupled without molding the assemblies within a common housing.

EP 0,782,160 discloses a diaphragm provided for the contact insulating housing of a mechanically operated high voltage switch. The diaphragm has a central portion through which the shaft from the mechanical operating mechanism to the moveable contact passes. The walls of the diaphragm about the central portion are mechanically joined or chemically bonded to the shaft. The diaphragm is made of such materials, dimensions and is configured so that the diaphragm moves with the shaft and prevents relative motion therebetween. The outer rim of the diaphragm is mechanically joined or chemically bonded to the switch housing. The quality of the diaphragm and the seals permit them to withstand the application of the full operating voltage of the switch.

DE 10 2011 089812 discloses a switching device for an electrically driven vehicle, in particular a track vehicle, having a switch unit that is provided for respectively connecting and disconnecting a vehicle drive unit to and from an electrical supply line carrying high voltage and having at least two switch contacts. A drive unit is provided for driving a relative movement of the switch contacts with respect to one another. A housing unit receives the switch unit and the drive unit. The housing unit contains a support for supporting at least the switch unit. In order to provide a generic switch device for which a compact construction can be achieved, the switch unit is arranged in a lying position relative to the support.

### DISCLOSURE OF THE INVENTION

### Problems to Be Solved by the Invention

It is desirable to provide a compact high voltage circuit breaker with a simple structure, which can be maintained with low cost. Also, it is desirable to improve the durability of the circuit breaker. Also, it is desirable to provide a circuit breaker that, when mounted on a train car roof, decreases air resistance in comparison with a train car with conventional circuit breaker, and hence increases the speed and energy efficiency of the train car.

### Means for Solving the Problems

According to an aspect of the present invention, there is provided a high voltage circuit breaker which adopts a configuration including as set forth in claim 1.

According to the present invention, it is possible to decrease the size of the circuit breaker, and at the same time improve its durability, while making it with a simple structure. Due to the reduced size, the circuit breaker has reduced mass and a smaller aerodynamic resistance.

According to the invention, the drive member of the drive module is an electrically insulating rod.

According to the invention, the drive module housing is filled with a dielectric material or contain a vacuum such that at least a part of the drive member is immersed into this dielectric material or is surrounded by the vacuum. This allows making the circuit breaker more compact, durable and low-maintenance.

According to another aspect of the invention, the drive module and the vacuum interrupter module may be separable, so that one module can be replaced without replacing the other. This allows for convenient maintenance of the circuit breaker.

According to the invention, the high voltage circuit breaker further comprises an encapsulation for the vacuum interrupter module and the drive module, the encapsulation having an insulating layer, a conductive layer, and at least two apertures to allow electrical connection to the at least two electrical contacts from the outside. This allows for more compact positioning of the circuit breaker with respect to earthed structures.

According to another aspect of the invention, the encapsulation may have an opening for receiving, at least partially, the drive module. This allows for convenient maintenance of the circuit breaker with the encapsulation.

In a preferred configuration, a high voltage circuit breaker includes a vacuum interrupter module including a vacuum interrupter housing and at least two electrical contacts in the vacuum interrupter housing, where at least one of the two electrical contacts is movable relative to the other, allowing the two electrical contacts to engage and disengage one from another for making and breaking the high voltage connection; the vacuum interrupter module further including an encapsulation for the vacuum interrupter module, the encapsulation having an insulating layer, an outer conductive ground screen layer, at least two apertures to allow connection to high voltage screened separable connectors, and an opening for receiving, at least partially, a drive module for the high voltage circuit breaker.

Also, in the preferred configuration, the high voltage circuit breaker includes a drive module including an electrically insulating drive member within an insulating housing where the drive member is not in contact with ambient air or moisture to ensure reliable dielectric performance, the electrically insulating drive member mechanically linking an actuator to the movable contact of the vacuum interrupter.

The high voltage circuit breaker preferably includes the actuator. However, the actuator is an optional part in the circuit breaker adopting a preferred configuration or the configuration defined in claim 1.

Preferably, the encapsulation for the vacuum interrupter module extends over all or part of the drive module, and any part of the drive module not covered by the encapsulation is covered by its own conductive screen. Preferably, the at least two electrical connection apertures are also covered with a conductive screen. Preferably, conductive screens together form a continuous screen, which may be grounded. Thus, preferably, the high voltage field is completely contained when each aperture is fitted with a screened separable connector or with a screened cap (the cap may be placed on top of a dead end plug). The complete containment of the high voltage field allows close positioning of any part of the circuit breaker and screened connectors to earthed structures.

According to another aspect of the invention, there is provided a high voltage circuit breaker system for railways comprising the circuit breaker according to one or more aspects of the invention and a control unit instructing the actuator to engage or disengage said two electrical contacts.

According to another aspect of the invention, the control unit and/or circuit breaker is placed under the roof of a train car in the high voltage circuit breaker system. This allows increasing durability of the circuit breaker system.

In a preferred configuration, the separate control unit is linked to the circuit breaker by an electrical cable. Also, preferably, the control unit is placed within a train car.

According to another aspect of the invention, the circuit breaker may be horizontally oriented and placed on the roof of a train car in the high voltage circuit breaker system. This allows decreasing air resistance of the train car with the on-roof circuit breaker.

According to another aspect of the invention, the circuit breaker may be placed under an aerodynamic cover on the roof of the train car. Similarly, this allows decreasing air resistance of the train car with the on-roof circuit breaker.

In a preferred configuration, the circuit breaker is installed at any orientation, such as vertically or horizontally, within a relatively compact equipment enclosure or case that is located either inside or outside the train car body at below roof level. This allows decreasing air resistance of the train car compared to an on-roof installation, allows for more efficient use of train car roof space, allows increasing the durability of the circuit breaker due to more benign environmental conditions inside a train or equipment case, and allows for easier access for maintenance purposes.

According to another aspect of the invention, the circuit breaker may be mounted to the train car with a vibration isolating mounting. This reduces transmission of noise and vibration into the car due to the operation of the circuit breaker.

According to another aspect of the invention, the high voltage circuit breaker system may include a current probe for measuring a current through any of the two electrical contacts, and/or a voltage probe for measuring a voltage bias between the two electrical contacts, wherein the control unit is adapted to process the measurement results to detect a loss of vacuum in the vacuum interrupter housing and / or a tripping condition.

According to another aspect of the invention, the high voltage circuit breaker system may include one or more of the following equipment: a surge arrester, a current transducer, a voltage transducer, and a bushing assembly. There may be a direct fitment of such equipment to the circuit breaker. Inclusion of one or more screened surge arrestors makes the system safer and more durable. The one or more current transducers may be used for purposes that include over-current detection, energy metering and loss of vacuum detection. The current transducers may be used for measuring current through any of the electrical connections or through adjoining screened high voltage cable assemblies. One or more voltage transducers may be used to detect / measure line voltage for train control purposes, energy metering, and loss of vacuum detection. The detection of a loss of vacuum in the vacuum interrupter housing and / or a tripping condition may be performed in the control unit adapted to process the measurement results. At least one bushing assembly may be used for connecting the circuit breaker to unscreened high voltage equipment such as the pantograph, earthing switch, voltage transducer, high voltage busbar and intercar jumper cables.

### Brief Description of the Drawings

The accompanying drawings are incorporated into and form a part of the specification for the purpose of explaining the principles of the invention. The drawings are not to be construed as limiting the invention to only the illustrated and described examples of how the invention can be made and used. Similar or corresponding details according to the present invention are provided with identical reference numerals. Further possible features and advantages of the invention will become apparent from the following description referring to the accompanying drawings, wherein:
- **Figures 1A and 1B**: show an example of a top view and a side view cross-sections of an encapsulated vacuum interrupter module for a high voltage circuit breaker for railways;
- **Figure 2A**: shows a side view of a cross-section of a drive module for a high voltage circuit breaker for railways;
- **Figure 2B**: shows a cross-section view of an electrically insulating drive member used in the drive module in the previous figure;
- **Figure 3**: shows a side view of a cross-section of another drive module for a high voltage circuit breaker for railways;
- **Figures 4A and 4B**: show a cross-section of a high voltage circuit breaker, in an open state and in a closed state, respectively;
- **Figure 5**: shows a cross-section of another high voltage circuit breaker, including the insulated drive module shown in Fig. 3;
- **Figures 6A, 6B and 6C**: show a top view, a side view, and a front view of the exterior of a circuit breaker with a protective case fitted;
- **Figures 7A and 7B**: schematically show a side view and a top view of a high voltage circuit breaker systems installed to a train car;
- **Figure 7C**: schematically shows a side view of another high voltage circuit breaker systems installed to a train car;
- **Figures 8A, 8B, 8C, 8D, 8E and 8F**: show various components which may be used to configure a modular high voltage circuit breaker system.
- **Figures 9A and 9B**: show a top view and a side view of a part of modular high voltage circuit breaker system shown in Figs. 7A and 7B.

### Detailed Description of Embodiments

The illustrated embodiments of the present invention will be described with reference to the drawings wherein like elements and structures are indicated by like reference numbers.

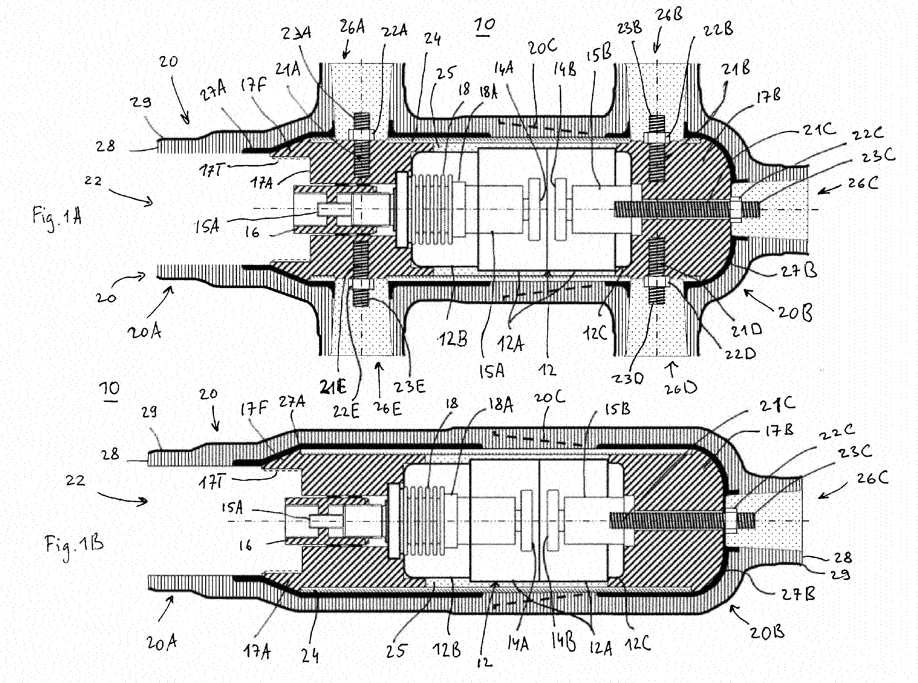

Referring to Figs. 1A and 1B, they respectively show examples of a top view and a side view of a cross-section of an encapsulated vacuum interrupter module 10. The module may be used as a part of a high voltage circuit breaker for railways. Module 10 includes a vacuum interrupter housing 12 incorporating two electrical contacts with faces 14A and 14B in the housing 12. Herein, the expression "vacuum interrupter housing" is understood as interchangeable with the expression "vacuum interrupter bottle". Contact with face 14A is movable relative to contact with face 14B, allowing the two electrical contacts to engage and disengage for making and breaking the high voltage connection. In Figs. 1A and 1B contacts with faces 14A and 14B are disengaged.

For efficient use of the vacuum interrupter module, the pressure of gas in the vacuum interrupter housing is normally in the high vacuum range, or the ultra-high vacuum range. In Figs. 1A and 1B the bottle 12 is conventional in that it includes a ceramic section 12A and conductive vacuum bottle end caps 12B and 12C. Also, it includes a bellows 18 to provide a vacuum-tight seal for the moving contact with face 14A. The bellows includes a bellows flange 18A and it may be made of a conductive material.

When the vacuum interrupter module of the invention is assembled with additional parts, such as the drive module of the invention, so as to form a circuit breaker, the movable contact is coupled with a drive member. The movable contact in vacuum interrupter module 10 has a movable contact stem 15A, with which the coupling may be formed. Thus, electrical contact face 14A is at a first end of the movable contact and movable contact stem 15A protrudes to a second end of the movable contact. Movable contact stem 15A protrudes from vacuum bottle 12.

Additionally, vacuum interrupter module 10 includes a sliding contact member 16 for mechanically coupling movable contact stem 15A with the drive member, and for electrical connection to connection block 17A, to which contact member 16 is slidably attached. Movable contact stem 15A is inserted into bellows 18 and protrudes through it. The connection between the assembly and bellows is vacuum-tight. Also, sliding contact member 16 is firmly attached to movable contact stem 15A by screw thread or other suitable means. Sliding contact member 16 is made of metal. Connection block 17A is, typically, a cylindrical component that may be formed from one or more parts of conductive material and which may be made of metal. The slidable attachments between the connection block and contact member may be realized with ribs and slots.

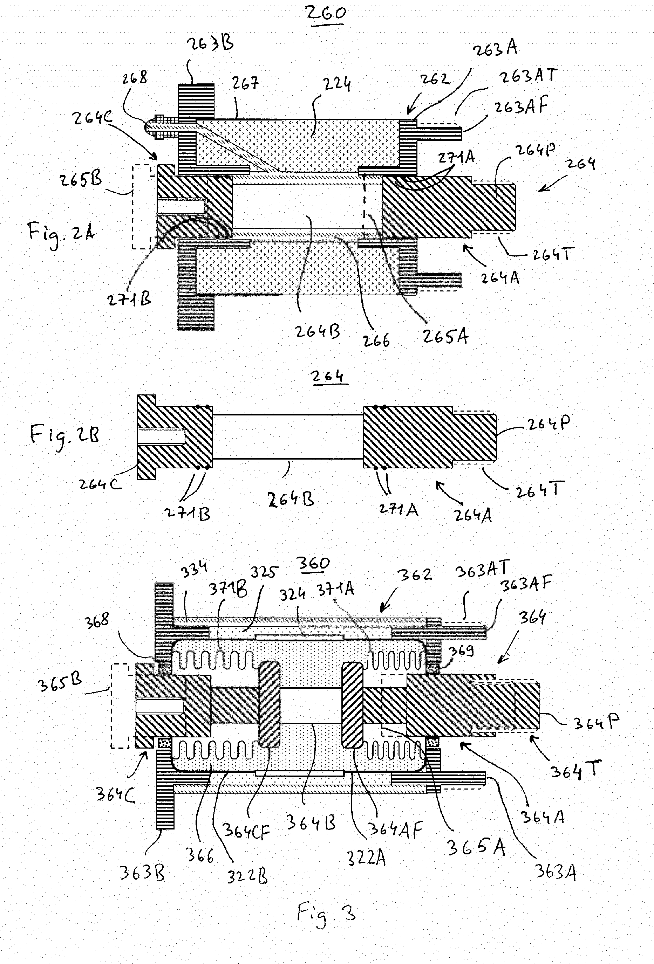

The connection block 17A is shaped for mechanically engaging with a drive module housing of a drive module, for example a drive module housing 262 of a drive module 260 shown in Fig. 2A or a drive module housing 362 of a drive module 360 shown in Fig. 3. For example, a connection block cavity flange 17F may have a female thread 17T that is designed to engage with a male thread 263AT or 363AT of a drive module housing 262 or 362 (see Figs. 2A and 3).

In vacuum interrupter module 10 there is at least one electrical path between electrical contact face 14A and connection block 17A. This is generally via sliding member 16 and assembly 15A and sliding member 16. In another example, the electrical path may include a part of assembly 15A and bellows 18. The resistance of this path should be chosen so as not to damage the bellows by the electric current. Hence, in a preferred configuration, most or all of the current, for example more than 80% of the current, passes though the sliding member.

According to the present example, the vacuum interrupter module 10 further includes headless conductive screws 21A and 21E screwed into connection block 17A and held in place by nuts 22A and 22E, respectively, or else may be composed of one piece components that incorporate hexagonal flats at a suitable position along the screw thread. Screws 21A and 21E have, respectively, protruding portions 23A and 23E presenting connection studs. Thus, external devices may be electrically coupled to the electrical contact with face 14A.

The static electrical contact with face 14B has a fixed contact stem 15B held in place by vacuum bottle 12. The connection of fixed contact stem 15B with vacuum bottle 12 is vacuum-tight. Electrical contact with face 14B is electrically coupled to a contact outside of vacuum housing 12, in the present example to a headless conductive screw 21C, for ease of connecting to outside connectors, such as screened cables.

Screw 21C is screwed through a conductive block 17B, and fixed in this block with a nut 22C. The block accommodates two more conductive screws 21B and 21D held in place by nuts 22B and 22D, respectively. However, contact faces 14A and 14B are insulated from each other when they are not engaged, by the vacuum and by a choice of material for the vacuum bottle or other parts of the vacuum interrupter housing

Vacuum interrupter module 10 further includes a structural insulating cylinder 24. It may be made of GRP (glass-fibre reinforced polymer). The space between cylinder 24, vacuum interrupter housing 12, contact blocks 17A and 17B is filled with a dielectric filler 25, which is preferably void-free.

Furthermore, vacuum interrupter module 10 in Figs. 1A and 1B includes an encapsulation 20. The encapsulation has an insulating layer 28, a conductive layer 29, and least two apertures or ports with five shown 26A, 26B, 26C, 26D and 26E to allow electrical connections to contacts with faces 14A and 14B. Also, encapsulation 20 has an opening 22 for receiving, at least partially, a drive module of the circuit breaker. In the present example, the opening is formed by an encapsulation segment 20A protruding from structural insulating cylinder 24 and contact block 17A. Conductive layer 29 is an outer layer with respect to insulating layer 28. Additionally, the encapsulation includes stress control layers 27A and 27B as optional parts. The encapsulation may be made of rubber for the most part.

With the encapsulation, the vacuum interrupter module 10 may contribute to the screening (i.e. shielding) the outer surface of the vacuum interrupter module, and the circuit breaker, from the high voltage electric field. Also, other parts of the circuit breaker, such as a drive module, may contribute to the screening. The screening may be complete; in this case any path from any high voltage conductive part of the circuit breaker to the outside of the circuit breaker includes an insulating segment and a screening segment.

The vacuum interrupter module may include a different number of apertures. In particular, this number may be two or more. An aperture may receive, for example, a high voltage bushing and / or a screened separable connector of 'T' or straight form. Apertures may be conveniently made at positions corresponding to the connection blocks. The apertures may be distributed around the vacuum interrupter module so as to facilitate a specific positioning of the circuit breaker. For example, in vacuum interrupter module 10 aperture 26C is axial. Such aperture may be conveniently used in case the circuit breaker is positioned horizontally. Also, the vacuum interrupter module may be made without apertures on that elongated side of the module which may be used for mounting the circuit breaker, for example, horizontally on a vibration isolation mounting. Unused apertures may be closed with screw in dead end plugs that fill the aperture void and which provide electrical insulation and which are fitted with covers that are conductive or which have a conductive screen. Such a cover will ensure continuity of the circuit breaker screen over the unused aperture.

The insulating layer of the encapsulation may be made of, for example, silicone rubber. The conductive layer may be, for example, a silicone conductive coating or other conductive polymer or substance that will form a lasting bond to the insulating layer. As mentioned, the encapsulation may include segments with one or more conductive or semi-conductive layers on the inside, for electrical stress control. For example, in Fig. 1A segment 20A of encapsulation 20 includes, in its part, stress control layer 27A. Such layer may be made of, for example, a stress control with high permittivity materials or non-lineal zinc oxide coated layers. The encapsulation may be an overmoulding bonded to the inside parts of the vacuum interrupter module, such as structural insulating cylinder 24. The encapsulation may be made as a single piece or it may be composed of several pieces. In Fig. 1A the encapsulation is composed of two pieces, with an interface 20C between pieces 20A and 20B of the encapsulation. Such an interface, if used, may include a dielectric grease.

Referring to Fig. 2A, it shows an example of a side view of a cross-section of drive module 260, including drive module housing 262 and a drive member 264. Fig. 2B shows this drive member separately. A part 264B of drive member 264 electrically insulates parts of the drive member adjacent to ends of drive member part 264B from each other. The drive member housing insulates a part of the drive member from ambient air; for example, the drive member except for its ends. In Fig. 2A, the drive member part insulated from the ambient air includes the whole electrically insulating part, i.e. part 264B; such configuration is preferable, but not required. The drive member may be a rod and may have various cross-sections, such as circular or rectangular. The electrically insulating drive member part may be made of, for example, the GRP or glass filled nylon.

Drive module 260 matches vacuum interrupter module 10 shown in Figs. 1A and 1B, at least in the sense that a drive member 264 is mechanically coupleable with electrical contact with face 14A. In the present example, the coupling is to include movable contact stem 15A. Also, in the present example, the coupling between drive member 264 of drive module 260 and the electrical contact with face 14A is to include sliding contact member 16 of the vacuum interrupter module. The drive member 264 includes an end part 264A, which in this example includes a cylindrical protrusion 264P. This end part engages with sliding contact member 16. The drive member may be attached to the sliding contact member using threads. In the present example, cylindrical protrusion 264P of the drive member has a thread 264T, which matches a thread in sliding contact member 16. The drive member's end part and the sliding contact member may have different matching shapes, for example, the sliding contact member may have a protrusion instead of the cylindrical cavity at the interface with the drive member; and the drive member may have a cavity attachable to this protrusion. Also, the multi-lam technique may be used.

In the example of Fig. 2A, drive module housing 262 includes a sealable gland 268 for introducing and extruding electrically insulating material into drive module housing. The drive module may be connected to an external reservoir or pressure vessel, to maintain even pressure and minor seepage replenishment. Alternatively, the drive module housing may include no such channel. In any case, drive member part 264B may be immersed into an insulating fluid 266, such as dielectric liquid or gel, when the circuit breaker is used. For instance, drive member part 264B may be immersed into silicone oil. The drive member may be sealably attached to the drive module housing, so as to prevent the leakage of the insulating material from the housing or its contamination from outside. In the example of Figs. 2A and 2B, drive member 264 includes piston seals 271A and 271B. Such a seal may be made of, for example, polytetrafluoroethylene (PTFE).

The drive module housing may be shaped for engaging with or attaching to the vacuum interrupter module, in particular a part different from the movable electrical contact. In Fig. 2A, drive module housing 262 includes a flange 263AF, so as to engage with connection block 17A (see Fig. 1A). The attachment may use, for example, threads. Flange 263AF has thread 263AT, as mentioned. Also, the drive module housing may take a shape fitting to the encapsulation of the vacuum interrupter module, if the encapsulation is included into that module.

With use of threads as in the examples of Figs. 1A, 1B, 2A and 2B, drive module housing 262 can be inserted into opening 22 in vacuum interrupter module 10 and rotated so that thread 263AT will engage into thread 17T. Drive member 264 can be independently rotated so that thread 264T will engage into the thread in sliding contact member 16. In such configuration, it is possible to obtain a mechanical coupling of sufficient strength and correct adjustment.

The drive module housing may be an arrangement of several parts. For example, drive module housing 262 includes a housing body 224, a first end fitting 263A having flange 263AF, a second end fitting 263B, and a conductive layer 267. The housing body electrically insulates ends of the housing from each other. Also, the housing body may electrically insulate ends of drive member from each other. The housing body may be made of, for example, plastic, such as ertalyte. Alternatively, the housing body may be made of another rigid insulating material. The end fittings are made of conductive material, for example, metal. Such an arrangement of fittings may help to build the screening around the high-voltage parts of the circuit breaker. The end fittings may be, for example, bonded, crimpled or screwed to the housing body224. Also, conductive layer 267 contributes to the screening around the high-voltage parts of the circuit breaker.

In the drive member, the parts adjacent to the electrically insulating part also may be conductive. Such an arrangement may help to build the screening around the high-voltage parts of the circuit breaker. In Figs. 2A and 2B, drive member 264 has end part 264A, as mentioned, and an end part 264C. Also drive member 264 has piston seals 271A and 271B. End parts 264A and 254C also can be called end fittings of the drive member. They may be circular and made of metal.

The drive member is to be coupled to actuator. End fitting 264C may be shaped for such coupling, for example, have a protrusion, or a cavity, in particular, of a cylindrical shape, and a thread.

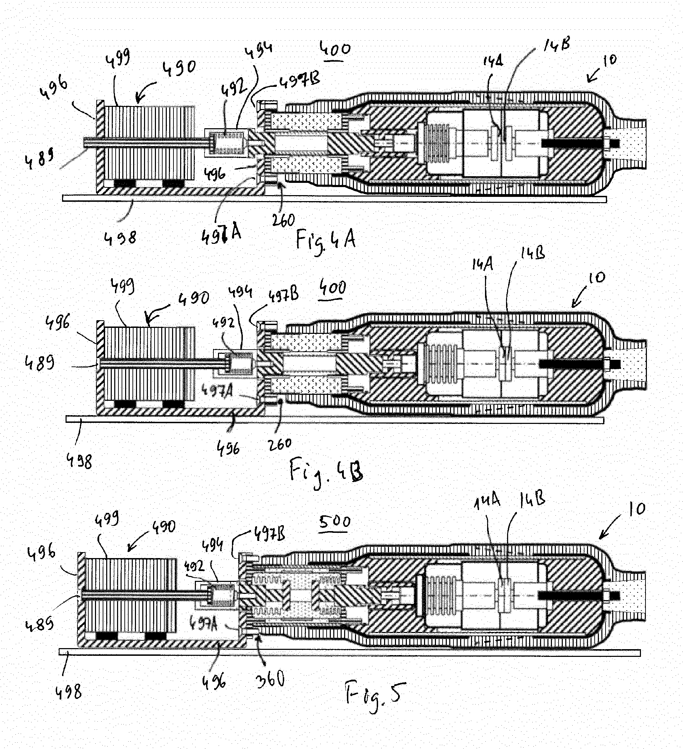

In Fig. 2A the electrically insulating drive member is in its rightmost position with respect to the drive module housing. When drive member 264 is in such position, and drive module 260 and the vacuum interrupter module 10 are joined for forming the high voltage circuit breaker, electrical contact face 14A is engaged with electrical contact face 14B (see also Fig. 4B). Drive member 64 may be moved into a leftmost position; in this case end fitting 264C will reach dashed line 265B. Of course, other parts of the drive member will also move. The left edge of fitting 264A and the right edge of insulating part 264B of the drive member will reach dashed line 265A. When drive member 264 acquires such a position, electrical contacts faces 14A and 14B are disengaged (see also Fig. 4A).

When drive module 260 and vacuum interrupter module are joined for forming the circuit breaker, and the vacuum interrupter module has an encapsulation, the encapsulation may not extend to the further end of the drive module, for example the screening fitting, such as end fitting 263B in Fig. 2A. This would increase the contribution which conductive layer 267 makes to the screening. The conductive layer may be a layer of semi-conductive "earth-screen" paint. An interface between the drive module housing and the encapsulation may be greased to provide a tracking resistant electrical seal.

The insulated driver module may be designed to operate for more than 250,000 cycles without maintenance. It may have 200 kV or higher basic insulation level (BIL) rating to suit 25 kV rail high voltage insulation requirements. It may be replaceable, due to the selected mechanical connections with the vacuum interrupter module and the actuator.

Referring to Fig. 3, it shows an example of a cross-section of another drive module 360 for the high voltage circuit breaker. Drive module 360 is also coupleable with vacuum interrupter module 10. Drive module 360 includes a drive module housing 362 and an electrically insulating drive member 364. Drive module housing 362 includes flange 363AF similar to flange 263AF in Fig. 2A. Also, drive module housing 362 includes protrusion 364P similar to protrusion 264P in Fig. 2A. Additionally, threads 363AT and 364T are similar to the respective threads 263AT and 264T in Fig. 2A. Thus, drive module 360 may be coupled with vacuum interrupter module 10.

Drive member 364 may be considered as including parts 364A, 364B and 364C. Drive member part 364B electrically insulates parts 364A and 364C from each other. Also, a part of the drive member, in particular the part composed from insulating part 364B, a section 364AF of end part 364A and a section 364CF of end part 364C, is insulated from ambient air. To this end, drive module housing 362 includes bellows 371A and 371B tightly attached to sections 364AF and 364CF. The bellows may be made of stainless steel. When drive member 364 moves to its leftmost position, it reaches dashed line 365A by the thick section of its part 364A and dashed line 365B by its part 364C in Fig. 5. Insulating part 364B and sections 364AF and 364CF move the same distance in the direction of dashed line 365B.

The part of drive member 364 insulated from ambient air may be immersed into insulating material 366, such as gas, or it may be surrounded by a vacuum, different from the vacuum in the vacuum interrupter module. The gas may be sulfur hexafluoride (SF₆). It may be under pressure exceeding atmospheric. The vacuum in the drive module housing may have a higher pressure of gas than the vacuum in the vacuum interrupter module (i.e. the level of vacuum in the drive module may be higher than the level of vacuum in the vacuum interrupter module).

Drive module housing 362 additionally includes an insulating body 324, which may be ceramic. Also, it includes caps 322A and 322B, which may be conductive, for example, made of metal. It further includes insulating or dielectric filler 325, preferably void-free, electrically insulating tubing 334 and guide collars 368 and 369 for the rod, i.e. drive member 364. End fittings 363A and 363B are different in shape from end fittings 263A and 263B, but they may be conductive as well, for example, made of metal. A conductive layer similar to layer 267 may be added to tubing 334 near end fitting 363B.

Referring to Figs. 4A and 4B, it shows a side view of a high voltage circuit breaker 400 for railways. Circuit breaker 400 includes vacuum interrupter module 10 engaged with drive module 260, and an actuator 490 coupled with the drive member of the drive module for engaging or disengaging electrical contacts 14A and 14B. In Fig. 4A the contacts are disengaged. In Fig. 4B these contacts are engaged.

In the present example, the actuator is coupled with the drive member via a contact pressure spring 492 kept in a casing 494. The actuator has a body 499 and a shaft 489. The body is in a fixed position with respect to the housing of the drive module. This position is maintained with a holding bracket 496, attached to the drive module housing with screws or bolts 497A and 497B. The actuator may include a position sensor for determining the shaft position. The actuator may include a socket for receiving control signals.

The circuit breaker may be mounted on a base plate, such as a base plate 498. The circuit breaker may be mounted to a train car with a vibration isolating mounting.

Referring to Fig. 5, it shows a high voltage circuit breaker 500 including the vacuum interrupter module 10 engaged with drive module 360. Electrical contacts 14A and 14B are engaged as well.

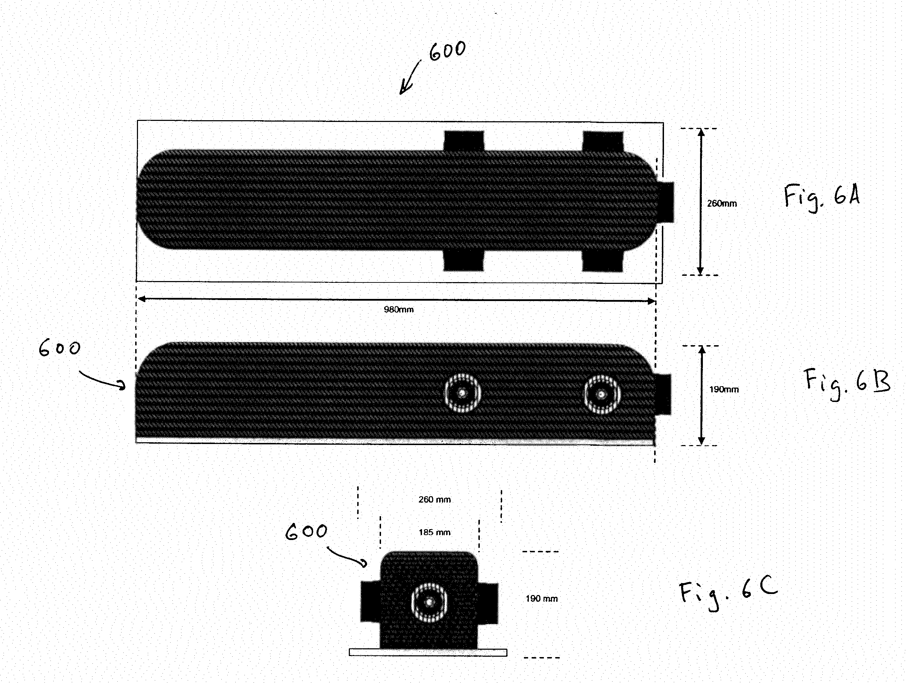

Referring to Figs. 6A, 6B and 6C, they show a top view, a side view and a front view of the exterior of a circuit breaker 600 of a circuit breaker with a protective case fitted. Circuit breaker 600 may be mounted horizontally on a roof of a train car, or off-roof, or under an aerodynamic cover. The circuit breaker preferably may have a height not exceeding 190 mm, a breadth not exceeding 185 mm in areas without apertures, and a breadth not exceeding 260 mm in areas with apertures. Furthermore, the circuit breaker may have preferably a length not exceeding 980 mm. The screening in the circuit breaker is to be earthed or grounded and the circuit breaker may touch earthed structures.

While such circuit breaker parts as the vacuum interrupter module, the drive module and the actuator, are mechanically coupled, the circuit breaker may be connected to a control unit through a wire and/or wirelessly. If the wire connection is to be used, the circuit breaker includes a socket or a wire with a connector for connecting the actuator to the control unit. The control unit instructs the actuator to engage or disengage the movable contact. Thus, this technique provides a high voltage circuit breaker system, which includes the circuit breaker, for example, in one of configurations as described above, and the control unit. The control unit adapts signals from the train to signals controlling the actuator for engaging or disengaging the movable contact.

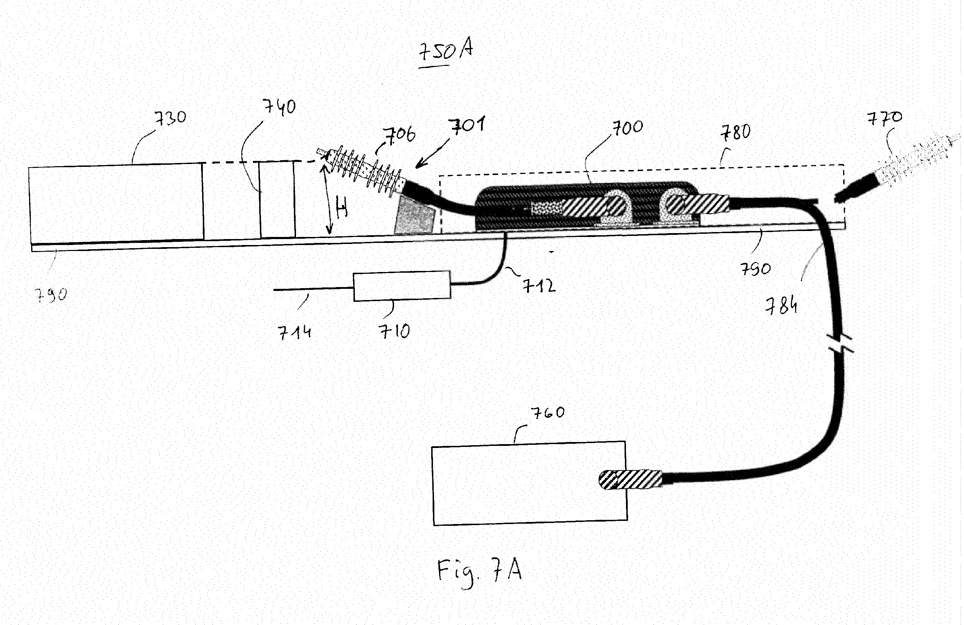

Referring to Fig. 7A, there is shown schematically a circuit breaker system 750A including a circuit breaker 700 and a control unit 710 instructing an actuator of the circuit breaker to engage or disengage the electrical contacts in the vacuum interrupter module.

Also, Fig. 7A illustrates that the circuit breaker may be placed on a roof 790 of a train car, and the control unit 710 may be placed under the roof of the train car. In the present example, the control unit sends control signals to the circuit breaker via a circuit breaker control connection 712. Control unit 710 receives signals from the train via a train control connection 714. Furthermore, Fig. 7A illustrates that the circuit breaker may be oriented horizontally when it is positioned on-roof.

Additionally, Fig. 7A schematically shows that the circuit breaker is connected to a pantograph 730, in the present example via an earthing switch 740. The earthing switch and pantograph may be considered as parts of the circuit breaker system.

The high voltage from the circuit breaker may be transmitted through a screened high voltage cable 784 to an underfloor traction transformer 760. Also, it may be transmitted to another car, via an inter-car jumper 770.

A height, where the unprotected connection from the pantograph and earthing switch ends, is marked as height H. It may not be smaller than the minimum distance to earthed structures allowed by clearance. Circuit breaker 700 is connected to earthing switch 740 via a bushing assembly 701 including a cable termination bushing 706. The bushing assembly is preferably a rigid termination bushing assembly.

As an option, the circuit breaker may be protected by a cover, schematically shown with dashed line 780. The cover may be aerodynamic, that is decrease the air resistance of the circuit breaker system. Additionally or alternatively, it may serve as a mechanical protection. For example, it may protect that part of a screened cable 784, which is placed on the roof of the train car. Additionally or alternatively, the cover may protect the circuit breaker from environmental influences, such as caused by pollution, sun, or rain.

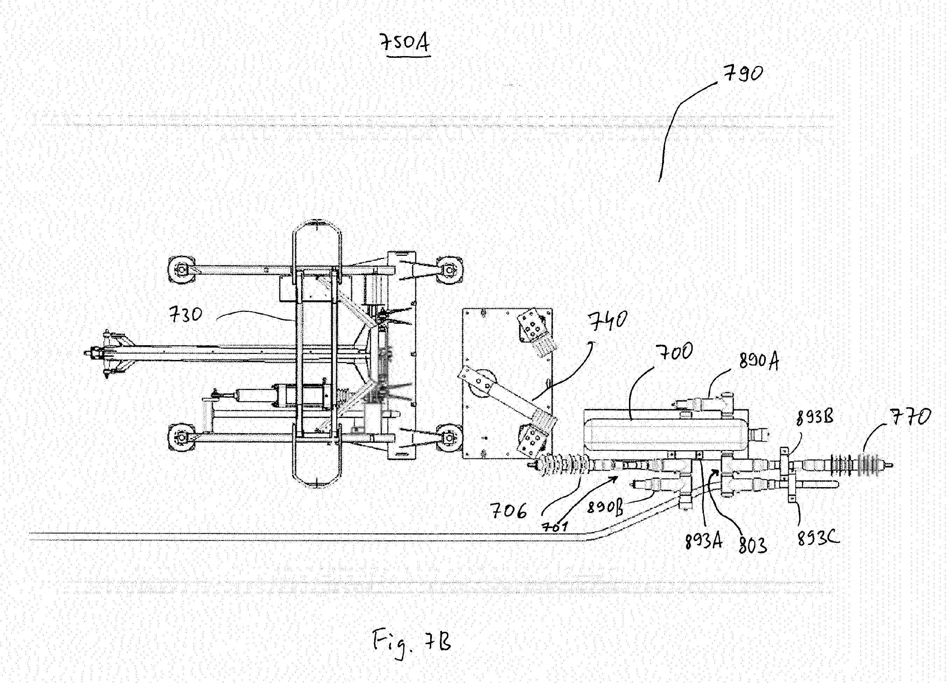

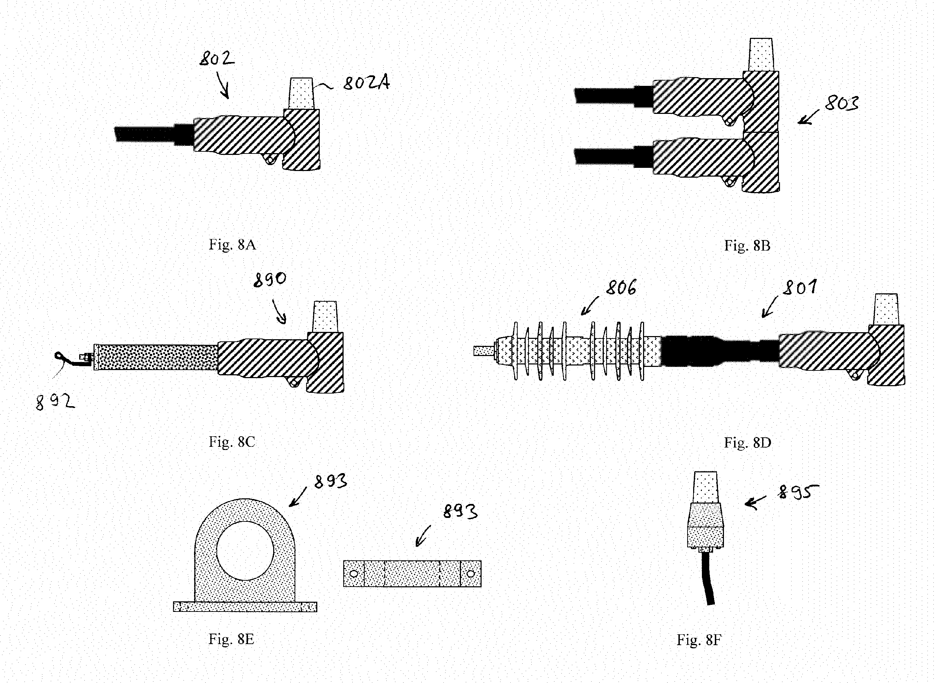

Referring to Fig. 7B, there is shown a top view of circuit breaker system 750A (however, not all parts mentioned above are seen; for example, control unit 710 is not shown in Fig. 7B). In Fig. 7B it is seen that system 750A additionally includes current transducers 893A, 893B and 893C, screened surge arrestors 890A and 890B, and screened voltage transducers or probes 895A and 895B. Current transducer 893A is useful for measuring a total current through circuit breaker 700. Current transducers 893B and 893C are useful for measuring currents flowing into different circuit branches. In particular, current transducer 893B is useful for measuring the current flowing through intercar jumper 770, and current transducer 893C is useful for measuring the current flowing to underfloor traction transformer 760. Such branching is arranged with a double stack cable termination 803 (of course, other branches can begin at different apertures in the circuit breaker). The double stack cable termination may be composed of two separable cable screened connectors. Closer views of the elements which can be used in the circuit breaker system are shown in Figs. 8A-8E.

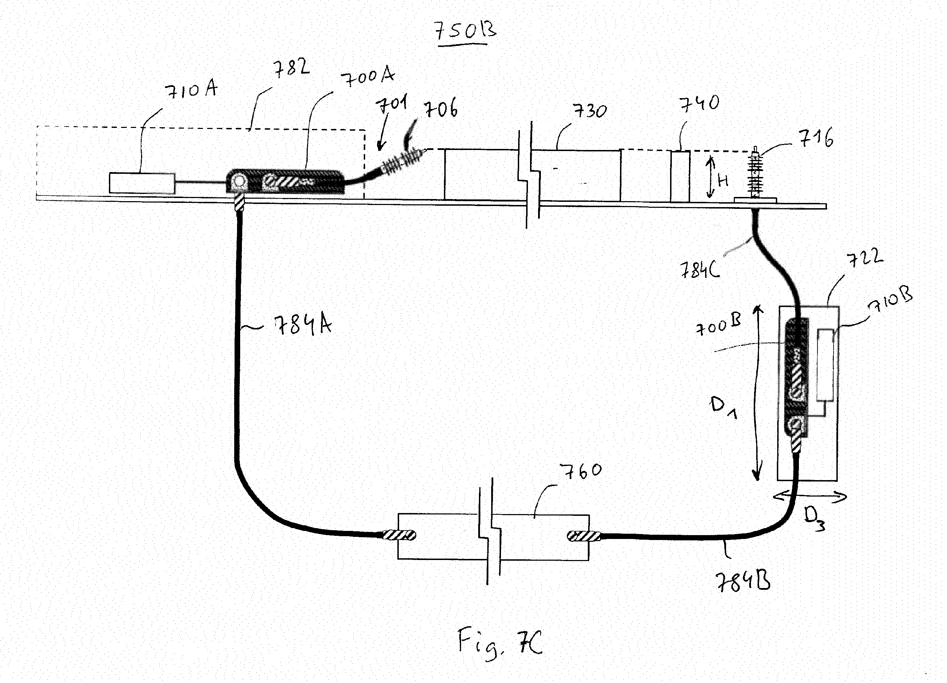

Referring to Fig. 7C, it schematically shows two more examples how parts of the circuit breaker system may be distributed in the train car. A system 750B includes two circuit breakers, 700A and 700B connected to underfloor traction transformer 760 via screened cables 784A and 784B, respectively.

It is seen from the positions of circuit breaker 700A and a control unit 710A Fig. 7C that both the circuit breaker and the control unit associated with it may be placed on the roof of the train car. As an option, they may be placed under a cover 782 or a roof outline if the roof is curved.

Also, it is seen from positions of circuit breaker 700B and a control unit 710B that both the circuit breaker and the control unit associated with it may be placed under the roof of the train car. The circuit breaker and the control unit may be placed in the same compartment, such as a compartment 722. The circuit breaker may be connected to pantograph via a roof bushing 716 and screened cable 784C. The connection of the circuit breaker to the pantograph may not include an earthing switch. The circuit breaker may be oriented vertically. The compartment does not need to electromagnetically shield the circuit breaker, i.e. it may have a dielectric wall. The distance from the circuit breaker to such a wall may be smaller than height H and may be even zero.

Based on the geometrical parameters of the circuit breaker discussed above with reference to Figs. 6A-6C, it may be estimated that a biggest dimension D1 of the compartment, into which the circuit breaker may be placed, may be less than 120 centimetres. A second biggest dimension may be less than 100, 50 or even 35 centimetres. A third biggest dimension D3 may be less than 80, 40 or even 20 centimetres. The smallest dimensions may be achieved in combination.

Also, a circuit breaker system may be formed from a high voltage circuit breaker, for example, as described herein, and, for example, at least one of an earthing device, a surge arrester, a current transformer, a current transducer, a voltage transducer, a bushing assembly for connecting to a safety earthing switch.

Referring to Figs. 8A-8F, there are shown several devices and components that may be used in a circuit breaker system, such as system 750A or 750B.

In Fig. 8A there is shown a high voltage cable termination 802. This termination may also be called a cable screened separable connector. An end 802A of this termination matches one or more apertures of the circuit breaker. The voltage cable termination may be a RSTI-CC-68 model.

In Fig. 8B there is shown double stack high voltage cable termination 803. The voltage cable termination may be a RSTI-CC-68 model.

In Fig. 8C there is shown a screened surge arrester 890. An earthing lead 892 of the surge arrester is to be grounded. Surge arrestor 890 is drawn similarly to surge arrestors 890A and 890B (see Fig. 7B); these surge arrestors may be of the same model or of different models. For example, the surge arresters may be a RSTI-SA-10 model.

In Fig. 8D there is shown a rigid termination bushing assembly 801. The assembly may be a RSTI-CC-68 model.

In Fig. 8E there are shown a side view and a top view of a current transducer 893. It is drawn similarly to current transducers 893A, 893B and 893C (see Fig. 7B), but these current transducers may be different, since they may be used to measure different currents.

In Fig. 8F there is shown a screened voltage transducer or probe 895. It is drawn similarly to screened voltage probes 895A and 895B, but these voltage probes (see Fig. 7B) may be different, since they are used to measure different voltages.

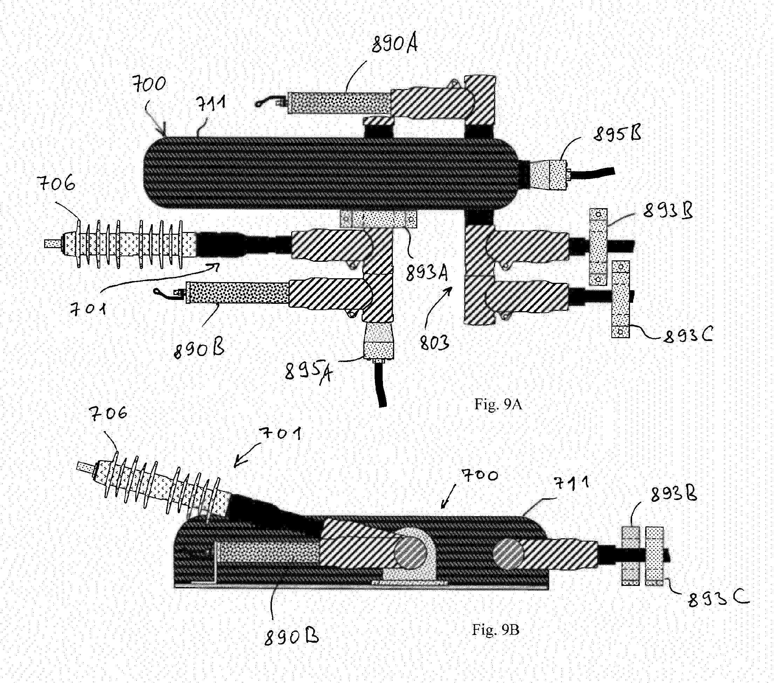

Referring to Figs 9A and 9B, they show a top view and a side view of a part of circuit breaker system 750A shown in Figs. 7A and 7B (Figs. 9A and 9B do not show, for example, control unit 710). Circuit breaker 700 has five apertures on its sides. It has no apertures on its top elongated part and on the bottom elongated part. Circuit breaker 700 is packed into a hard shell 711 (such element is also called "protective case" where the reference is made to circuit breaker 600 and Fig. 6).

Additionally, the following should ne noted with regard to the parts mentioned above. A control unit may include a socket for connecting the control unit to a train power supply. Additionally or alternatively, the control unit may be connected to its own power supply, for example, a battery and / or a solar power generator.

In the circuit breaker system with the control unit, a current transducer (or probe) for measuring a current through any of the two or more electrical contacts, and/or a voltage transducer (or probe) for measuring a voltage bias between the two or more electrical contacts, may be beneficially used. For example, the control unit may process the measurement results to detect a loss of the vacuum in the vacuum interrupter housing and / or a tripping condition. The circuit breaker system may include an electronic unit for controlling the high voltage probe.

In some cases, the voltage and/or current probe do not have to be connected to the control unit. For example, these devices may be used for metering energy, what may be done not only by the control unit, but by an energy meter as well. Also, the results of the measurements may be logged. Such data may be used for service history, condition monitoring, and fault analysis.

Also, the voltage probe may be used to provide signals for train system control (safety interlocks), and/or faulty circuit breaker detection, and/or precise timing of circuit breaker operation with respect to voltage cycle, and/or harmonic voltage monitoring during new train testing. The voltage probe signals, when sent to the circuit breaker control unit, may be used to disengage the movable contact in the vacuum interrupter module, for example, so as to react to loss of power or a control card fault.

The circuit breakers, the vacuum interrupter modules, and the drive modules illustrated above may be advantageous for the following reasons. While a conventional high AC voltage railway circuit breaker has a drive rod for moving the contact in the vacuum, the length of such rod is substantial, for example, due to surface creepage path length requirements in air. However, even with such length the conventional rod is prone to electrical flashover due to surface condensation from air humidity. Further, according to the invention, the existence of such electrical flashover risk in the conventional rod actually allows increasing the durability of the device, by eliminating exposure of the rod to ambient air. Also, the relatively large length of the conventional rod allows decreasing the size of the circuit breaker, by making the rod shorter. While the electrically insulating drive member is placed in its own housing, such housing takes some space and would generally increase the size of the circuit breaker. However, according to the present technique, the increase in the size of the device due to the added housing can be overcompensated by the reduction in the size of the rod, i.e. the drive member. Hence, the drive member may be shorter than 30 centimetres. For example, it may be shorter than 20 centimetres.

The improved durability and simpler maintenance of the circuit breaker lead to a substantial advantage due to the trends in development of railways. Such factors as construction of the new tracks and branches, broader use of the high AC voltage, as well as generally higher speed and more frequent use of the trains set new demands on the number of cycles for which the circuit breaker has to function.

Also, the encapsulation, which may be bonded to the vacuum interrupter module and may be not bonded to the drive module or at least may be not moulded to a part of the drive module, may decrease the risk of a mechanical failure when the rod is made shorter. Indeed, in case the rod is made shorter, but no protection from the ambient air is realized, parts of the circuit breaker would need to be made stiffer to partially compensate for the reduced voltage withstand capability. However, this would increase the risk of a fatigue or a detachment / debonding failure, especially in case if rubber parts are present. Also, the risk of such failures is higher for rolling stock equipment, especially high-speed trains.

However, a configuration in which the drive module with the electrically insulating drive member is attached to the vacuum interrupter module before the overmoulding process is also possible. In this case the encapsulation is permanently bonded to the drive module, and the drive module is not replaceable, although it takes less space than a conventional rod assembly.

In any case, the encapsulation allows decreasing the minimal distances from earthed structures to the circuit breaker. In other words, the electrical air clearance requirements to the earthed structures, such as train roof, or cabinet walls or doors, or an aerodynamic cover, may be lifted. The off roof placement of the circuit breaker helps increasing the device durability even further, due to the improved protection of the device from external influences, mechanical and environmental.

Making the circuit breaker smaller and lifting the electrical air clearance requirements allows decreasing the dimensions of the space required for the placement of the circuit breaker, especially in height. The achievable reduction leads to especially significant advantage due to certain trends in the railway development. For example, the achievable reduction allows arranging the circuit breaker inside the train car, in particular, in some rather small compartments of the state of the art high-speed train cars; or on the train roof, under an aerodynamic cover fitted to the circuit breaker; and/or horizontally.

Thus, the achievable reduction allows building or adapting train cars for use on train routes, which run through high altitude, cold weather, high humidity or high air pollution areas. Additionally, such train cars can be routed through tighter clearance tunnels or under tighter clearance bridges. Also, building double decker trains is facilitated when the space required for placing the circuit breaker is smaller.

Thus, in other words, the present invention provides a compact circuit breaker and associated connection system where all high voltage components are entirely encapsulated in insulation and enclosed by a screen which can be grounded; this means that there are no exposed high voltage surfaces or external electric fields which permits safe installation within or under the train car structure without need of the large electrical air clearances required of conventional train circuit breakers, and which therefore realises considerable reduction in size and weight of any enclosing cabinet, case or cover.

Also the present invention provides a fully encapsulated system whose electrical insulating properties are not affected by pollution, precipitation or air pressure and which can therefore be operated in extreme conditions with no maintenance required.

It should be noted that a train car (in the broad sense, e.g. including a locomotive), which includes the circuit breaker system according to the technique described herein, is also regarded as enabled by the present invention. In particular, the train car may include the circuit breaker in an off-roof position, or protected with a cover, and/or is mounted horizontally. The train car may include a pantograph connected to the circuit beaker system.

Also, a train car, which includes a circuit breaker, and the minimal distance between the circuit breaker and any earthed component is smaller than the current air clearance, is also considered as related to the present technique.

In those areas, it is believed that those ordinary skilled in the art are familiar have not been described herein in order to not unnecessarily obscure the invention described herein. Accordingly, it is to be understood that the invention is not to be limited by the specific illustrated embodiments, but only by the scope of the appended claims.

| | |
|---|---|
| 10 | Encapsulated vacuum interrupter module |
| 12 | Vacuum interrupter housing (Vacuum interrupter bottle) |
| 12A | Ceramic section of the vacuum interrupter housing |
| 12B and 12C | Conductive end caps of the vacuum bottle |
| 14A | Face of movable electrical contact |
| 14B | Face of static electrical contact |
| 15A | Movable contact stem |
| 15B | Fixed contact stem |
| 16 | Sliding contact member |
| 17A and 17B | Connection blocks |
| 17F | Flange of connection block 17A |
| 17T | Flange thread |
| 18 | bellows |
| 18A | bellows flange |
| 20 | Encapsulation |
| 20 | Encapsulation segments (or pieces) |
| 20C | Interface between the encapsulation segments |
| 21A, 21B, 21C, 21D and 21E | Headless conductive screws |
| 22 | Drive module opening |
| 22A, 22B, 22C, 22D and 22E | Nuts (or hexagonal flats) |
| 23A, 23B, 23C, 23D and 23E | Protruding studs |
| 24 | Structural insulating cylinder |
| 25 | Dielectric filler |
| 26A, 26B, 26C, 26D, 26E | Apertures or ports for screened high voltage connectors |
| 27A and 27B | Electrical stress control layers |
| 28 | Insulating layer |
| 29 | Conductive layer |
| 224 | Housing body |
| 260 | Drive module |
| 262 | Drive module housing |
| 263A | First end fitting of the drive module housing |
| 263B | Second end fitting of the drive module housing |
| 263AF | Flange of the first end fitting of the drive module housing |
| 263AT | Thread on the flange of the first end fitting of the drive module housing |
| 264 | Drive member |
| 264A | First end of the drive member (or first drive member end fitting) |
| 264B | Insulating part of drive member |
| 264C | Second end of the drive member end (or second drive member end fitting) |
| 264P | Protrusion on the first drive member end fitting |
| 264T | Thread on the protrusion on the first drive member end fitting |
| 265A and 265B | Dashed lined indicating 'Open' position of drive member |
| 266 | Insulating material |
| 267 | Conductive layer |
| 268 | Sealable gland |
| 271A and 271B | Piston seals |
| 322A and 322B | Caps of drive module housing |
| 324 | Insulating part of drive module housing |
| 325 | Dielectric filler |
| 334 | Electrically insulating tubing |
| 360 | Drive module |
| 362 | Drive module housing |
| 363A | First housing end fitting |
| 363AT | Thread |
| 363AF | Flange |
| 363B | Second housing end fitting |
| 364A, 364B, 364C | Drive member parts |
| 364 | Drive member |
| 364A | First drive member end fitting |
| 364P | Protrusion |
| 364T | Thread |
| 364B | Insulating part of drive member |
| 364C | Second drive member end fitting |
| 364AF | Section of first drive member end fitting |
| 364CF | Section of second drive member end fitting |
| 365A and 365B | Dashed lines indicating 'open' position of drive member |
| 368 and 369 | Guide collars |
| 371A, 371B | Bellows |
| 400 | High voltage circuit breaker |
| 489 | Actuator shaft |
| 490 | Actuator |
| 492 | Contact pressure spring |
| 494 | Spring casing |
| 496 | Holding bracket |
| 497A and 497B | Screws or bolts |
| 498 | Base plate |
| 499 | Actuator body |
| 500 | High voltage circuit breaker |
| 600 | High voltage circuit breaker (in a protective shell or an envelope) |
| 700 | High voltage circuit breaker (in a protective shell or an envelope) |
| 700A and 700B | Circuit breakers |
| 701,801 | Bushing assembly |
| 706, 806 | Cable termination bushing |
| 710, 710A and 710B | Control units |
| 711 | Protective shell of the high voltage circuit breaker |
| 712 | Circuit breaker control connection |
| 714 | Train control connection |
| 716 | Roof bushing (or high voltage downlead) |
| 722 | Compartment |
| 730 | Pantograph |
| 740 | Earthing switch |
| 750A | Circuit breaker system |
| 750B | Circuit breaker system |
| 760 | Underfloor traction transformer |
| 770 | Intercar jumper |
| 780 | Cover |
| 782 | Cover |
| 784 | Screened high voltage cable |
| 790 | Roof line |
| 802 | High voltage cable termination |
| 802A | An end of the high voltage cable termination |
| 803 | Double stack cable termination |
| 890, 890A and 890B | Screened surge arrestors |
| 892 | Earthing lead of the surge arrestor |
| 893, 893A, 893B, 893C | Current transducers |
| 895, 895A and 895B | Screened voltage transducers |

## Claims

1. A high voltage circuit breaker (400, 500, 600, 700, 700A, 700B) comprising:
a vacuum interrupter module (10) comprising a vacuum interrupter housing (12) and at least two electrical contacts (14A, 14B) in the vacuum interrupter housing (12), where at least one (14A) of the two electrical contacts (14A, 14B) is movable relative to the other, allowing the two electrical contacts (14A, 14B) to engage and disengage one from another for switching on and off a high voltage;
a drive module (260, 360) comprising a drive module housing (262, 362) and an electrically insulating drive member (264, 364), at least a part (264B, 364B) of the electrically insulating drive member (264, 364) being contained in the drive module housing (262, 362) insulating said part (264B, 364B) from ambient air, said electrically insulating drive member (264, 364) being coupled with the at least one movable contact (14A); and
an actuator (490) coupled to the electrically insulating drive member (264, 364) for providing a relative movement of said at least two electrical contacts (14A, 14B),
wherein the drive member is an electrically insulating rod,
wherein said drive module housing (262, 362) is filled with a dielectric material (266, 366) or contains a vacuum such that at least a part (264B, 364B) of the drive member is immersed into this dielectric material (266, 366) or is surrounded by said vacuum, and
wherein the high voltage circuit breaker (400, 500, 600, 700, 700A, 700B) further comprises an encapsulation (20) for the vacuum interrupter module (10) and the drive module (60, 160), the encapsulation having an insulating layer, a conductive layer, and at least two apertures (26A, 26B, 26C, 26E, 26D) to allow electrical connection to the at least two electrical contacts (14A, 14B) from the outside.

2. The high voltage circuit breaker (400, 500, 600, 700, 700A, 700B) of claim 1, wherein the drive module (260, 360) and the vacuum interrupter module (10) are separable, so that one module can be replaced without replacing the other.

3. The high voltage circuit breaker (400, 500, 600, 700, 700A, 700B) of claim 1, wherein the encapsulation (20) has an opening (22) for receiving, at least partially, the drive module (260, 360).

4. A high voltage circuit breaker system (750A, 750B) for railways comprising the circuit breaker (700, 700A, 700B, 400, 500, 600) according to any one of the preceding claims and a control unit (710, 710A, 710B) instructing the actuator to engage or disengage said two electrical contacts.

5. The high voltage circuit breaker system (750A, 750B) of the previous claim, wherein the control unit (710, 710B) and/or the circuit breaker (700B, 400, 500, 600) is placed under a roof (790) of a train car.

6. The high voltage circuit breaker system (750A, 750B) of claim 4 or 5, wherein the circuit breaker (700, 700A, 700B, 400, 500, 600) is connected to a pantograph (730) of a train car via a cable termination bushing (706, 806) or a roof bushing (716), and / or an earthing switch (740).

7. The high voltage circuit breaker system (750A, 750B) of claim 4, wherein the circuit breaker (700, 700A, 400, 500, 600) is horizontally oriented and placed on a roof (790) of a train car.

8. The high voltage circuit breaker system (750A, 750B) of the previous claim, wherein the circuit breaker (700, 700A, 400, 500, 600) is placed under an aerodynamic cover (780, 782) on the roof of the train car.

9. The high voltage circuit breaker system (750A, 750B) of any of claims 4 to 8 further comprising a current probe for measuring a current through any of said two electrical contacts (14A, 14B), and/or a voltage probe (895) for measuring a voltage bias between said two electrical contacts (14A, 14B), wherein the control unit is adapted to process the measurement results to detect a loss of vacuum in the vacuum interrupter housing (12) and / or a tripping condition.

10. The high voltage circuit breaker system of any of claims 4 to 9 further comprising one or more of the following: an earthing switch (740), a surge arrester (890, 890A, 890B), a current transducer (893, 893A, 893B, 893C), a termination bushing assembly (701, 801).

## Patentansprüche

1. Hochspannungsleistungsschalter (400, 500, 600, 700, 700A, 700B), der umfasst:
ein Vakuumunterbrechermodul (10), das ein Vakuumunterbrechergehäuse (12) und wenigstens zwei elektrische Kontakte (14A, 14B) in dem Vakuumunterbrechergehäuse (12) umfasst, wobei wenigstens einer (14A) der zwei elektrischen Kontakte (14A, 14B) relativ zu dem anderen bewegbar ist, wodurch es möglich wird, dass die zwei elektrischen Kontakte (14A, 14B) zum Ein- und Ausschalten einer Hochspannung miteinander in Eingriff kommen und sich lösen;
ein Antriebsmodul (260, 360), das ein Antriebsmodulgehäuse (262, 362) und ein elektrisch isolierendes Antriebselement (264, 364) umfasst, wobei wenigstens ein Teil (264B, 364B) des elektrisch isolierenden Antriebselements (264, 364) in dem Antriebsmodulgehäuse (262, 362) enthalten ist, das den Teil (264B, 364B) von Umgebungsluft isoliert, wobei das elektrisch isolierende Antriebselement (264, 364) mit dem wenigstens einen beweglichen Kontakt (14A) gekoppelt ist; und
ein Stellelement (490), das mit dem elektrisch isolierenden Antriebselement (264, 364) gekoppelt ist, um eine relative Bewegung der wenigstens zwei elektrischen Kontakte (14A, 14B) bereitzustellen,
wobei das Antriebselement ein elektrisch isolierender Stab ist,
wobei das Antriebsmodulgehäuse (262, 362) mit einem dielektrischen Material (266, 366) gefüllt ist oder ein Vakuum derart enthält, dass wenigstens ein Teil (264B, 364B) des Antriebselements in dieses dielektrische Material (266, 366) getaucht oder von dem Vakuum umgeben ist, und
wobei der Hochspannungsleistungsschalter (400, 500, 600, 700, 700A, 700B) des Weiteren eine Einkapselung (20) für das Vakuumunterbrechermodul (10) und das Antriebsmodul (60, 160) umfasst, wobei die Einkapselung eine isolierende Schicht, eine leitende Schicht und wenigstens zwei Öffnungen (26A, 26B, 26C, 26E, 26D) hat, um eine elektrische Verbindung mit den wenigstens zwei elektrischen Kontakten (14A, 14B) von außen zu ermöglichen.

2. Hochspannungsleistungsschalter (400, 500, 600, 700, 700A, 700B) nach Anspruch 1, wobei das Antriebsmodul (260, 360) und das Vakuumunterbrechermodul (10) trennbar sind, so dass ein Modul ausgewechselt werden kann, ohne das andere auszuwechseln.

3. Hochspannungsleistungsschalter (400, 500, 600, 700, 700A, 700B) nach Anspruch 1, wobei die Einkapselung (20) eine Öffnung (22) hat, um das Antriebsmodul (260, 360) wenigstens teilweise aufzunehmen.

4. Hochspannungsleistungsschaltersystem (750A, 750B) für Eisenbahnen, das den Leistungsschalter (700, 700A, 700B, 400, 500, 600) nach einem der vorhergehenden Ansprüche und eine Steuereinheit (710, 710A, 710B) umfasst, die das Stellelement anweist, mit den zwei elektrischen Kontakten in Eingriff zu kommen oder sie zu lösen.

5. Hochspannungsleistungsschaltersystem (750A, 750B) nach dem vorhergehenden Anspruch, wobei die Steuereinheit (710, 710B) und/oder der Leistungsschalter (700B, 400, 500, 600) unter einem Dach (790) eines Eisenbahnwaggons platziert werden.

6. Hochspannungsleistungsschaltersystem (750A, 750B) nach Anspruch 4 oder 5, wobei der Leistungsschalter (700, 700A, 700B, 400, 500, 600) mit einem Stromabnehmer (730) eines Eisenbahnwaggons über eine Kabelabschlussdurchführung (706, 806) oder eine Dachdurchführung (716) und/oder einem Erdungsschalter (740) verbunden ist.

7. Hochspannungsleistungsschaltersystem (750A, 750B) nach Anspruch 4, wobei der Leistungsschalter (700, 700A, 400, 500, 600) horizontal ausgerichtet und auf einem Dach (790) eines Eisenbahnwaggons angeordnet ist.

8. Hochspannungsleistungsschaltersystem (750A, 750B) nach dem vorhergehenden Anspruch, wobei der Leistungsschalter (700, 700A, 400, 500, 600) unter einer aerodynamischen Abdeckung (780, 782) auf dem Dach des Eisenbahnwaggons angeordnet ist.

9. Hochspannungsleistungsschaltersystem (750A, 750B) nach einem der Ansprüche 4 bis 8, das des Weiteren eine Stromsonde zum Messen eines Stroms durch jeden der zwei elektrischen Kontakte (14A, 14B) und/oder eine Spannungssonde (895) zum Messen einer Vorspannung zwischen den zwei elektrischen Kontakten (14A, 14B) umfasst, wobei die Steuereinheit angepasst ist, um die Messergebnisse zu verarbeiten, um einen Vakuumverlust im Vakuumunterbrechergehäuse (12) und/oder eine Auslösebedingung zu erfassen.

10. Hochspannungsleistungsschaltersystem nach einem der Ansprüche 4 bis 9, das des Weiteren eins oder mehr des folgenden umfasst: einen Erdungsschalter (740), einen Überspannungsableiter (890, 890A, 890B), einen Stromwandler (893, 893A, 893B, 893C), eine Abschlussdurchführungsanordnung (701, 801).

## Revendications

1. Disjoncteur haute tension (400, 500, 600, 700, 700A, 700B) comprenant:
un module interrupteur à vide (10) comprenant un boîtier d'interrupteur à vide (12) et au moins deux contacts électriques (14A, 14B) dans le boîtier d'interrupteur à vide (12), dans lequel au moins un (14A) des deux contacts électriques (14A, 14B) est mobile par rapport à l'autre, permettant aux deux contacts électriques (14A, 14B) de les mettre en prise et de les libérer l'un de l'autre pour activer et éteindre une haute tension;
un module d'entraînement (260, 360) comprenant un boîtier de module d'entraînement (262, 362) et un élément d'entraînement électriquement isolant (264, 364), au moins une partie (264B, 364B) de l'élément d'entraînement électriquement isolant (264, 364) étant contenu dans le boîtier de module d'entraînement (262, 362) isolant ladite partie (264B, 364B) de l'air ambiant, ledit élément d'entraînement électriquement isolant (264, 364) étant couplé avec ledit au moins un contact mobile (14A); et
un actionneur (490) couplé à l'élément d'entraînement électriquement isolant (264, 364) pour assurer un mouvement relatif desdits au moins deux contacts électriques (14A, 14B),
dans lequel l'élément d'entraînement est une tige électriquement isolante,
dans lequel ledit boîtier de module d'entraînement (262, 362) est rempli d'un matériau diélectrique (266, 366) ou contient un vide de sorte qu'au moins une partie (264B, 364B) de l'élément d'entraînement est immergée dans ledit matériau diélectrique (266, 366) ou est entourée par ledit vide, et
dans lequel le disjoncteur haute tension (400, 500, 600, 700, 700A, 700B) comprend en outre une encapsulation (20) pour le module interrupteur à vide (10) et le module d'entraînement (60, 160), l'encapsulation comportant une couche isolante, une couche conductrice et au moins deux ouvertures (26A, 26B, 26C, 26E, 26D) pour permettre une connexion électrique avec lesdits au moins deux contacts électriques (14A, 14B) depuis l'extérieur.

2. Disjoncteur haute tension (400, 500, 600, 700, 700A, 700B) selon la revendication 1, dans lequel le module d'entraînement (260, 360) et le module interrupteur à vide (10) sont séparables, donc ce module peut être remplacé sans remplacer l'autre.

3. Disjoncteur haute tension (400, 500, 600, 700, 700A, 700B) selon la revendication 1, dans lequel l'encapsulation (20) comporte une ouverture (22) pour recevoir, au moins partiellement, le module d'entraînement (260, 360).

4. Système disjoncteur haute tension (750A, 750B) pour des voies ferrées comprenant le circuit disjoncteur (700, 700A, 700B, 400, 500, 600) selon l'une quelconque des revendications précédentes et une unité de commande (710, 710A, 710B) ordonnant à l'actionneur de mettre en prise ou de libérer lesdits deux contacts électriques.

5. Système disjoncteur haute tension (750A, 750B) de la revendication précédente, dans lequel l'unité de commande (710, 710B) et/ou le disjoncteur (700B, 400, 500, 600) sont placés sous un toit (790) d'un wagon de train.

6. Système disjoncteur haute tension (750A, 750B) selon les revendications 4 ou 5, dans lequel le disjoncteur (700, 700A, 700B, 400, 500, 600) est relié à un pantographe (730) d'un wagon de train par le biais d'une douille de terminaison de câble (706, 806) ou une douille de toit (716) et/ou un interrupteur de mise à la terre (740).

7. Système disjoncteur haute tension (750A, 750B) selon la revendication 4, dans lequel le disjoncteur (700, 700A, 400, 500, 600) est orienté horizontalement et placé sous un toit (790) d'un wagon de train.

8. Système disjoncteur haute tension (750A, 750B) selon la revendication précédente, dans lequel le disjoncteur (700, 700A, 400, 500, 600) est placé sous un capot aérodynamique (780, 782) sous un toit du wagon de train.

9. Système disjoncteur haute tension (750A, 750B) selon l'une quelconque des revendications 4 à 8 comprenant une sonde de courant pour mesurer un courant à travers l'un quelconque desdits deux des contacts (14A, 14B) et/ou une sonde de tension (895) pour mesurer une polarisation de tension entre lesdits deux contacts électriques (14A, 14B), dans lequel l'unité de commande est adaptée pour traiter les résultats de la mesure permettent de détecter une perte de vide dans le boîtier d'interrupteur à vide (12) et/ou une condition de déclenchement.

10. Système disjoncteur haute tension selon l'une quelconque des revendications 4 à 9, comprenant en outre un ou plusieurs éléments parmi les suivants: un interrupteur de mise à la terre (740), un parafoudre (890, 890A, 890B), un transducteur de courant (893, 893A, 893B, 893C), un ensemble douille de terminaison (701, 801).
